# EUROPÄISCHE PATENTSCHRIFT

(11) **EP 2 888 076 B1**
(45) Veröffentlichungstag und Bekanntmachung des Hinweises auf die Patenterteilung: **30.11.2016**
(21) Anmeldenummer: 13750298.5
(22) Anmeldetag: 13.08.2013
(51) Int. Cl.: B23Q 3/155, B23Q 3/157

(54) **WERKZEUGMAGAZIN UND SPIRALBAHNEINHEIT**
TOOL MAGAZINE AND HELICAL TRACK UNIT
MAGASIN D'OUTILS ET UNITÉ À ORBITE EN SPIRALE

(30) Priorität: 23.08.2012 DE 102012107789
(43) Veröffentlichungstag der Anmeldung: 01.07.2015
(73) Patentinhaber: Chiron-Werke GmbH & Co. KG, 78532 Tuttlingen (DE)
(72) Erfinder: PRUST, Dirk, 78532 Tuttlingen (DE); KOHLER, Markus, 78194 Immendingen (DE)
(74) Vertreter: Witte, Weller & Partner Patentanwälte mbB
(86) Internationale Anmeldenummer: PCT/EP2013/066861
(87) Internationale Veröffentlichungsnummer: WO 2014/029659

(56) Entgegenhaltungen:
- FR-A1- 2 102 101
- US-A- 3 650 018

## Beschreibung

Die vorliegende Erfindung betrifft ein Werkzeugmagazin für eine Werkzeugmaschine mit einer Werkzeugspindel, in die Werkzeuge zur Bearbeitung von Werkstücken einspannbar sind, wobei in dem Werkzeugmagazin Werkzeughalter vorgesehen sind, in denen zum Einwechseln in die Werkzeugspindel vorgesehene Werkzeuge ablegbar sind.

Eine Werkzeugmaschine mit einem derartigen Werkzeugmagazin ist aus der DE 102 25 143 A1 bekannt.

Im Rahmen der vorliegenden Erfindung wird unter einer "Werkzeugmaschine" eine Anordnung zur Bearbeitung von Werkstücken mit in eine Werkzeugspindel eingespannten Werkzeugen verstanden, bei der die Werkzeugspindel und das Werkstück relativ zueinander zumindest in einer der drei orthogonalen Raumachsen x, y und z verfahrbar sind.

Dabei können alle drei Bewegungsrichtungen in der Werkzeugspindel realisiert werden, so dass diese in x-, y- und z-Richtung auf das Werkstück zugestellt wird. Es ist jedoch auch möglich, eine oder zwei Bewegungsrichtungen, insbesondere die x- und y-Richtung, in dem Werkstück zu realisieren.

Für die Realisierung der vorliegenden Erfindung ist es jedoch unerheblich, wie die Bewegungsachsen auf die Werkzeugspindel und das Werkstück verteilt werden.

Sofern alle drei Bewegungsrichtungen in der Werkzeugspindel realisiert sind, ist die Werkzeugmaschine vorzugsweise eine Fahrständermaschine mit vertikalachsiger Werkzeugspindel, die Werkzeugspindel wird also in vertikaler Richtung auf das Werkstück zugestellt. Es ist jedoch auch möglich, die Werkzeugspindel horizontal auszurichten, so dass die Zustellung horizontal erfolgt.

Ferner ist es möglich, entweder in der Werkzeugspindel und/oder in dem Werkstück weitere Schwenk- und Drehachsen anzuordnen.

Während der Bearbeitung der Werkstücke werden nacheinander unterschiedliche Werkzeuge in die Werkzeugspindel eingewechselt. Diese Werkzeuge werden in geeignet ausgebildeten Werkzeughaltern in einem Werkzeugmagazin vorrätig gehalten, das als Maschinenmagazin an der Werkzeugmaschine selbst angeordnet sein kann und in bestimmten Ausführungen die Fahrbewegungen der Werkzeugspindel zumindest teilweise mit vollzieht. Die Zahl der in einem solchen, ggf. mitfahrenden Maschinenmagazin zu lagernden Werkzeuge ist begrenzt, sie beträgt häufig 20, 30 oder auch 50 Werkzeuge.

Alternativ oder zusätzlich kann das Werkzeugmagazin auch als sogenanntes Hintergrundmagazin oder externes Werkzeugmagazin ausgebildet ein, in dem eine beliebige Anzahl von Werkzeugen vorrätig gehalten kann, und aus dem Werkzeuge entweder direkt in die Werkzeugspindel eingewechselt oder gegen Werkzeuge in einem zusätzlich vorhandenen Maschinenmagazin ausgetauscht werden.

Derartige Werkzeugmaschinen mit Werkzeugmagazinen sind aus dem Stand der Technik vielfach bekannt. Das Werkzeugmagazin ist dabei in der Regel an der Werkzeugmaschine angebracht und kann beispielsweise als Kettenmagazin oder als Tellermagazin ausgebildet sein.

Bei einem Kettenmagazin wird zum Beispiel eine massive Kette mit den an den Kettengliedern angebrachten Werkzeughaltern im Kreis hin- und hergefahren. Bei einem Tellermagazin ist eine kreisförmige Struktur mit umfänglich angeordneten Werkzeughaltern vorgesehen. Dieser Teller wird zum Werkzeugwechsel ebenfalls im Kreis hin- und hergefahren.

Aus der DE 197 24 635 A1 ist eine Werkzeugmaschine mit einem Hintergrundmagazin in Form eines Tellermagazins bekannt, bei der als Übergabevorrichtung ein Doppelgreifer vorgesehen ist, der Werkzeuge zwischen dem Tellermagazin und dem Arbeitsraum der Werkzeugmaschine hin- und hertransportiert. Der Doppelgreifer entnimmt dabei ein Werkzeug aus dem Tellermagazin und wird mit diesem Werkzeug dann in den Arbeitsraum geschwenkt. Dort fährt die Werkzeugspindel im Pick-up-Verfahren den Doppelgreifer an, legt das aktuell in die Werkzeugspindel eingespannte Werkzeug in dem freien Greifer des Doppelgreifers ab, und ergreift dann das zuvor aus dem Tellermagazin in den Doppelgreifer eingelegte Werkzeug.

Aus der DE 190 19 446 A1 ist eine Werkzeugmaschine bekannt, bei der das Maschinenmagazin als Kettenmagazin ausgebildet ist. Zum Werkzeugwechsel wird das Kettenmagazin in den Arbeitsraum der Werkzeugmaschine geschwenkt, wo ein Werkzeugwechsel zu der Werkzeugspindel im Pick-up-Verfahren stattfindet.

In dem jeweiligen Maschinenmagazin kann aber nur eine bestimmte Anzahl von Werkzeugen zwischengelagert werden, so dass häufig ein externes Werkzeugmagazin als Hintergrundmagazin vorgesehen ist, durch das weitere Werkzeuge bereitgestellt werden. Eine derartige Werkzeugmaschine beschreibt die DE 197 24 635 A1.

Eine ähnliche Konstruktion zeigt auch die DE 100 20 801 A1. Das Hintergrundmagazin ist hier als Regalmagazin ausgelegt, in dem eine sehr große Anzahl von Werkzeugen an räumlich festen Positionen zwischengespeichert werden kann. An dem Regalmagazin ist eine Entnahmevorrichtung vorgesehen, die die einzelnen Werkzeuge anfährt und aus ihrem festen Lagerplatz in dem Regalmagazin entnimmt. Danach wird das Werkzeug zu einer gegenüber dem Regalmagazin ortsfesten Übergabeposition transportiert.

Diese Übergabeposition wird auch von einem schwenkbar am Maschinengestell gelagerten Doppelgreifer bedient, der in der Übergabeposition ein Werkzeug an die Entnahmevorrichtung abgeben bzw. ein neues Werkzeug von der Entnahmevorrichtung entnehmen kann. Mit diesem neuen Werkzeug schwenkt der Doppelgreifer dann in die Nähe des Arbeitsraumes der Werkzeugmaschine, wo er das neue Werkzeug für einen Werkzeugwechsel im Pick-up-Verfahren bereitstellt. Dieser Doppelgreifer ist eine Übergabevorrichtung im Sinne der vorliegenden Anmeldung.

Wenn die Werkzeugspindel einen Bearbeitungsvorgang beendet hat, fährt sie zu der Spindelposition des Doppelgreifers und legt zunächst das bisher verwendete Werkzeug in dem freien Greifer ab. Danach ergreift die Werkzeugspindel das neu aus dem Regalmagazin herangebrachte Werkzeug und fährt wieder in den Arbeitsraum, wo mit dem neuen Werkzeug die Bearbeitung des Werkstückes fortgesetzt wird.

Die Zahl der bei dieser Konstruktion zur Verfügung stehenden Werkzeuge ist theoretisch beliebig groß, so dass durch das Hintergrundmagazin zusammen mit der Übergabevorrichtung und dem Doppelgreifer die bei Maschinenmagazinen aus Platzgründen vorhandene Problematik der limitiert zur Verfügung stehenden Werkzeuge beseitigt ist.

Die bekannte Konstruktion ist jedoch konstruktiv aufwändig, wobei der Werkzeugwechsel für viele Anwendungsfälle auch nicht schnell genug ist.

Davon ausgehend beschreibt die DE 102 25 143 A1 eine Werkzeugmaschine, bei der die Übergabevorrichtung ein Maschinenmagazin ist, in dem zwar nur eine begrenzten Anzahl von Werkzeugen gespeichert werden kann, das dafür aber die Möglichkeit eines schnelles Werkzeugwechsels bietet. Diese Vorteile werden jetzt kombiniert mit den Vorteilen des Hintergrundmagazins, bei der die Speichermöglichkeit für eine beliebig große Anzahl von Werkzeugen ausgenutzt werden kann.

Die bekannte Werkzeugmaschine ermöglicht damit zum einen den schnellen Werkzeugwechsel mit Hilfe des Maschinenmagazins, wobei zwischen dem Hintergrundmagazin und dem Maschinenmagazin Werkzeuge ausgetauscht werden können, so dass das Maschinenmagazin sozusagen virtuell auf die Größe des Hintergrundmagazins ausgedehnt wurde.

Die US 3,650,018 A beschreibt wie die eingangs erwähnte DE 102 25 143 A1 ein Werkzeugmagazin für eine Werkzeugmaschine mit einer Werkzeugspindel, in die Werkzeuge zur Bearbeitung von Werkstücken einspannbar sind. In dem Werkzeugmagazin sind Werkzeughalter vorgesehen, in die in die Werkzeugspindel einzuwechselnde Werkzeuge abgelegt sind.

Das bekannte Hintergrundmagazin besteht aus einem vertikalen Zapfen, an dem eine Vielzahl von Scheibenmagazinen übereinander angeordnet sind, wobei die einzelnen Scheibenmagazine unabhängig voneinander verdreht werden können. Jede Scheibe weist eine Vielzahl von Aufnahmevorrichtungen auf, die an der Peripherie der Scheibe angeordnet sind und zur Aufnahme von Werkzeugen dienen.

Zwischen dem Hintergrundmagazin und der Werkzeugmaschine ist ein erstes Übertragungsmittel vorgesehen, das Werkzeuge aus einem Aufnahmeraum zur Spindel transportiert, wobei zweite Übertragungsmittel vorgesehen sind, die ein gebrauchtes Werkzeug von der Spindel zurück in den Aufnahmeraum transportieren.

Bei den bekannten Hintergrundmagazinen und externen Werkzeugmagazinen ist von Nachteil, dass sie konstruktiv aufwändig sind und zudem häufig einen großen Stellplatz neben oder hinter der Werkzeugmaschine benötigen.

Die nicht vorveröffentlichte DE 10 2012 113 312 A1 der hiesigen Anmelderin schlägt vor diesem Hintergrund vor, das Speichervermögen des bekannten Werkzeugmagazins dadurch prinzipiell beliebig zu erweitern, dass eine in sich geschlossene dreidimensionale Laufbahn vorgesehen ist, an der Werkzeugschlitten verschiebbar gelagert sind, an denen die Werkzeughalter ausgebildet sind.

Dadurch wird ermöglicht, dass nicht wie bei einem Ketten- oder Tellermagazin die Haltestruktur verfahren wird, an der die Werkzeughalter befestigt sind, sondern lediglich die einzelnen Werkzeugschlitten an einer Laufbahn verfahren werden, die in beliebigen dreidimensionalen geometrischen Formen, also räumlich angeordnet werden kann. Diese Laufbahn ist also eine Endlosbahn, an/auf der die Werkzeugschlitten im Kreis und/oder hin und her geschoben oder gefahren werden können.

Die Werkzeugschlitten sind dabei nicht Teil einer Kette oder über eine Kette, einen Riemen oder ein sonstiges Element eines Zugmitteltriebes in festen Abständen zueinander angeordnet oder miteinander verbunden, sie können vielmehr unabhängig voneinander an der Laufbahn verfahren werden.

Jeder Werkzeugschlitten kann daher auch einzeln angetrieben werden, so dass die erforderlichen Beschleunigungskräfte geringer sind als bei Kettenmagazinen. Damit sind auch die mechanischen Belastungen, denen die einzelnen Werkzeugschlitten ausgesetzt sind, gering, so dass die Werkzeugschlitten zumindest zum Teil auch aus Kunststoff gefertigt werden können.

Damit kann auch an einer beliebigen Stelle längs der Laufbahn eine Übergabeposition vorgesehen sein. Die Werkzeugschlitten werden also auf oder an der Laufbahn zu der Übergabeposition gefahren, wo die Werkzeuge in eine Übergabevorrichtung übergeben werden, die ein Maschinenmagazin oder ein Greifer sein kann, der direkt die Werkzeugspindel bedient. An den Werkzeugschlitten sind dazu Werkzeughalter vorgesehen, in denen Werkzeuge gehalten sind.

Andere, bekannte Werkzeugmagazine ermöglichen wegen der Kettentriebe keine dreidimensionale geschlossene Laufbahn, vielmehr sind mäanderförmige Strukturen bekannt, die entweder in der waagerechten oder senkrechten Ebene verlaufen. Waagerechte Strukturen sind besonders für die Versorgung von vertikalachsigen Werkzeugspindeln, senkrechte Strukturen für die Versorgung von waagerechten Werkzeugspindeln geeignet, weil dann die Werkzeuge zum Werkzeugwechsel nicht auch noch um 90° gekippt werden müssen.

Dreidimensionale Speicherstrukturen, die sich also sowohl in der waagerechten als auch in der senkrechten Ebene jeweils in beiden Dimensionen ausdehnen, sind aus dem Stand der Technik nur für Scheibenmagazine mit mehreren Etagen bekannt. Durch die Größer und die Anzahl der einzelnen Scheiben kann die Speicherkapazität beeinflusst werden. Allerdings sind auch hier komplexe Übergabe- und Entnahmevorrichtungen erforderlich. Eine in sich geschlossene Laufbahn ist bei diesem Stand der Technik nicht zu realisieren.

Die Laufbahn der in der DE 10 2012 113 312 A1 beschriebenen Werkzeugmagazine weist dagegen eine räumliche dreidimensionale Struktur auf, bei der die Laufbahn in Etagen übereinander wie in einer Art Regal angeordnet ist. Bei gleicher Aufstellfläche lassen sich so durch Vergrößerung des Aufbaus nach oben bei Bedarf mehr Werkzeuge speichern. Umgekehrt lassen sich bei gleicher Höhe durch Vergrößerung der Aufstellfläche mehr Werkzeuge speichern.

Unter einer "dreidimensionalen Laufbahn" wird im Rahmen der vorliegenden Erfindung eine sich in allen drei Raumachsen ersteckende Laufbahn verstanden, an der die Werkzeugschlitten so verfahren werden, dass sie sich nicht lediglich in einer horizontalen, schrägen oder vertikalen Ebene sondern abwechselnd in Richtung aller drei Raumachsen bewegen.

Zumindest während bestimmter Bewegungsabschnitte fahren die Werkzeugschlitten mit einer Bewegungskomponente jeweils in eine der drei Raumachsen.

Eine regalartige Anordnung der Werkzeuge ist übrigens aus der DE 100 20 801 A1 bekannt, dort ist aber eine komplexe, zu jeder Speicherposition in dem Regal verfahrbare Entnahmevorrichtung erforderlich, weil die Werkzeuge starr in dem Regal abgelegt sind.

Das in der DE 10 2012 113 312 A1 beschriebene Werkzeugmagazin benötigt so eine Entnahmevorrichtung nicht, denn trotz begrenzter Aufstellfläche kann auch bei nahezu beliebig zunehmender Anzahl an gespeicherten Werkzeugen jedes Werkzeug mit seinem Werkzeugschlitten zu der Übergabeposition verfahren werden.

Das in der DE 10 2012 113 312 A1 beschriebene Werkzeugmagazin kann als Hintergrundmagazin und externes Werkzeugmagazin für beliebige Werkzeugmaschinen eingesetzt werden, insbesondere wird es mit den aus den eingangs erwähnten Veröffentlichungen bekannten Werkzeugmaschinen eingesetzt. Vorzugsweise wird es zusammen mit einem Maschinenmagazin eingesetzt, dass als Übergabevorrichtung zum Speichern von mehreren Werkzeugen vorgesehen wird.

Die Laufbahn ist dabei in Form von zwei parallel zueinander oder koaxial ineinander angeordneten Spiralen mit vertikal übereinander verlaufenden Windungen ausgelegt, wobei die Laufbahn entweder stangenförmiges Material umfasst oder als Führungsnut in einem Mantel eines Zylindergehäuses ausgelegt ist.

In zumindest einer der Spiralen ist ein drehangetriebener Antriebszylinder mit einer nach außen weisenden Zylinderfläche angeordnet ist, wobei an der Zylinderfläche ein Antriebsmittel vorgesehen ist, das einen Werkzeugschlitten längs der Laufbahn verschiebt, wenn der Antriebzylinder gedreht wird. Das Antriebsmittel umfasst mehrere nach außen offene Mitnehmernuten an der Zylinderfläche, die sich schräg oder parallel zu der Zylinderhochachse erstrecken, wobei an zumindest einem Werkzeugschlitten ein Führungsteil vorgesehen ist, das in die Mitnehmernut eingreift, wenn sich der Werkzeugschlitten in der Spirale befindet.

Diese Maßnahmen schaffen einen sehr einfachen Antrieb für das Verfahren der Werkzeugschlitten an der Laufbahn. Auf den Spiralen werden sie durch die Mitnehmernuten mitgenommen, zwischen den Spiralen durch von den Spiralen nachschiebende Werkzeugschlitten vorwärts bewegt. Die Werkzeugschlitten werden somit einzeln bewegt, wenn sie in den Spiralen laufen, und zu wenigen nebeneinander verschoben, wenn sie sich zwischen den Spiralen befinden.

Das Speichervermögen für Werkzeuge wird dabei zwar auch durch den Durchmesser, im Wesentlichen jedoch durch die Zahl der Windungen in der Spirale bestimmt wird. Höhe und Steigung der Laufbahn in der Spirale hängen dabei auch von der Höhe der einzulagernden Werkzeuge ab.

Ein Vorteil der Anordnung als Laufbahn-Spirale besteht darin, dass in der Spirale ein kontinuierlicher Übergang von "Etage zu Etage" erfolgt, so dass keine besonderen Maßnahmen erforderlich sind, damit die Werkzeugschlitten längs der gesamten Laufbahn fahren können.

Soll die Speicherkapazität des Werkzeugmagazins erhöht werden, so sind lediglich mehr Windungen in der Spirale vorzusehen, die Aufstellfläche, muss dagegen nicht verändert werden. Für Werkzeugmagazine mit unterschiedlichen Speicherkapazitäten müssen jedoch unterschiedliche Spiralen und Antriebszylinder bereitgehalten werden, was insbesondere vor dem Hintergrund der Lagerhaltung und aus Kostengründen als nachteilig empfunden wird.

Zur späteren Erhöhung der Speicherkapazität eines bestehenden Werkzeugmagazins müssen dann zwar lediglich die Spiralen und Antriebszylinder ausgetauscht werden, aber die bisher verwendeten Spiralen und Antriebszylinder müssen entsorgt oder einer anderen Verwendung zugeführt werden, was ebenfalls insbesondere unter Kostengesichtspunkten von Nachteil sein kann.

Vor diesem Hintergrund liegt der vorliegenden Erfindung die Aufgabe zugrunde, ein Werkzeugmagazin der eingangs genannten Art bereitzustellen, in dem das Speichervermögen für Werkzeuge auf preiswerte sowie konstruktiv einfache Art und Weise verändert werden kann, und das einen geringen Platzbedarf erfordert.

Erfindungsgemäß wird diese Aufgabe bei dem eingangs erwähnten Werkzeugmagazin dadurch gelöst, dass zumindest zwei übereinander angeordnete Spiralbahneinheiten vorgesehen sind, die jeweils ein Zylindergehäuse und einen in dem Zylindergehäuse um seine Zylinderhochachse drehbar gelagerten Antriebszylinder umfassen, an jedem Zylindergehäuse eine spiralförmige Führungsnut ausgebildet ist, an der Werkzeugschlitten verschiebbar gelagert sind, an denen die Werkzeughalter ausgebildet sind, und an jedem Antriebszylinder zumindest ein Antriebsmittel vorgesehen ist, das bei relativer Drehung des Antriebszylinders gegenüber dem Zylindergehäuse einen Werkzeugschlitten längs der Führungsnut verschiebt.

Auf diese Weise werden die Vorteile des in der DE 10 2012 113 312 A1 beschriebene Werkzeugmagazin genutzt und zugleich wird auf konstruktiv einfache Weise dafür gesorgt, dass auch bei bestehenden Werkzeugmagazinen der erfindungsgemäßen Art nachträglich das Speichervermögen für Werkzeuge verändert werden kann, indem Spiralbahneinheiten hinzugefügt oder entfernt werden.

Bei dem neuen Werkzeugmagazin ist insbesondere von Vorteil, dass die Spiralbahneinheiten stapelbar sind, so dass je nach Speicherbedarf die entsprechende Anzahl von Spiralbahneinheiten in einem Werkzeugmagazin verbaut werden kann.

Der Erfinder der vorliegenden Anmeldung hat ferner erkannt, dass dieser modulare Aufbau des Werkzeugmagazins nicht nur eine einfache Anpassung des Speichervermögens an die Anzahl der benötigten Werkzeuge erlaubt, sondern auch die Ausbildung konstruktiv einfacher und dennoch steifer Spiralbahneinheiten ermöglicht, in denen die Werkzeugschlitten einfach und schnell verfahren werden können, ohne dass die Gefahr besteht, dass sie verklemmen.

Die der Erfindung zugrunde liegende Aufgabe wird auf diese Weise vollkommen gelöst.

Dabei ist es bevorzugt, wenn die Führungsnut als in sich geschlossene, dreidimensionale Laufbahn für die Werkzeugschlitten ausgebildet ist, und wenn vorzugsweise in den zumindest zwei übereinander angeordneten Spiralbahneinheiten die Führungsnut in Form zumindest einer Spirale mit vertikal übereinander verlaufenden Windungen angeordnet ist.

Mit diesen Maßnahmen werden die Vorteile realisiert, wie sie oben im Zusammenhang mit dem in der DE 10 2012 113 312 A1 beschriebenen Werkzeugmagazin dargelegt wurden.

Insbesondere ist es dabei bevorzugt, wenn die Führungsnut in Form von zwei Spiralen angeordnet ist, die gegensinnig gewickelt und an ihrem oberen sowie unteren Enden miteinander verbunden sind.

Hier ist zum einen von Vorteil, dass sich die Speicherkapazität verdoppelt ohne dass die Aufstellfläche verdoppelt werden muss. Da die Führungsnut in sich geschlossen ist, durchläuft sie beide Spiralen, so dass z.B. nur eine einzige Übergabeposition für beide Spiralen erforderlich ist. Die beiden Spiralen sind dabei vorzugsweise nebeneinander angeordnet. Es ist erfindungsgemäß aber auch vorgesehen, die beiden Spiralen koaxial zueinander anzuordnen, so dass sich eine Spirale mit kleinerem Außendurchmesser koaxial in einer Spirale mit größerem Außendurchmesser befindet.

Im Hinblick auf die gegensinnige Wicklung der Spiralen ist von Vorteil, dass die Führungsnut selbst kurz ausgelegt sein kann, denn die Werkzeugschlitten fahren die eine Spirale hoch, wechseln zur anderen und fahren dort wieder herunter. Die Spiralen können so sehr eng nebeneinander angeordnet werden, wobei der Übergang der Werkzeugschlitten von einer Spirale zur anderen kontinuierlich erfolgt.

Insgesamt ist diese Anordnung zudem konstruktiv sehr einfach aufgebaut.

Weiter ist es bevorzugt, wenn die Führungsnut in jeder Spiralbahneinheit eine Windung von 360° durchläuft.

Wenn jede Spiralbahneinheit jeweils nur eine einzige Windung zu der Spirale beiträgt, kann sie konstruktiv einfach und doch steif aufgebaut sein. Oberhalb und unterhalb der Führungsnut befindet sich nämlich nur Wandmaterial und keine weitere Windung der Führungsnut, so dass die Breite und Form der Führungsnut über die mechanische Fixierung des oberhalb und unterhalb der Führungsnut befindlichen Wandmaterials sichergestellt werden kann.

Dies stellt einen merklichen Vorteil gegenüber der Anordnung aus der DE 10 2012 113 312 A1 dar, bei der in dem Zylindermantel viele Windungen der Führungsbahn vorgesehen waren.

Allgemein ist es bevorzugt, wenn der Antriebszylinder eine Zylinderfläche aufweist, das Antriebsmittel zumindest eine nach außen offene Mitnehmernut an der Zylinderfläche umfasst, die sich parallel zu der Zylinderhochachse erstreckt, und dass an zumindest einem Werkzeugschlitten ein Führungsteil vorgesehen ist, das in die Mitnehmernut eingreift, wenn sich der Werkzeugschlitten an der Führungsnut befindet.

Diese Maßnahmen schaffen einen sehr einfachen Antrieb für das Verfahren der Werkzeugschlitten an der Führungsnut. Auf den Spiralen werden sie durch die Mitnehmernuten mitgenommen, zwischen den Spiralen durch von den Spiralen nachschiebende Werkzeugschlitten vorwärts bewegt. Der Antrieb erfolgt beim Drehen des Antriebszylinders dadurch, dass sich die Mitnehmernut unter der Führungsnut vorbeibewegt und dabei den Werkzeugschlitten, dessen Führungsteil in der Mitnehmernut sitzt, in Umfangsrichtung längs der Führungsnut mitnimmt und auf dieser so spiralförmig nach oben schiebt.

Die Werkzeugschlitten werden somit einzeln bewegt, wenn sie in den Spiralen laufen, und zu wenigen nebeneinander verschoben, wenn sie sich zwischen den Spiralen befinden. Dies trägt dazu bei, dass die mechanischen Anforderungen an die Werkzugschlitten gering sind.

Es reicht dabei aus, wenn eine Mitnehmernut vorgesehen ist, die jeweils einen Werkzeugschlitten zurzeit ein Stück längs der Führungsnut verschiebt. Dabei verschiebt dieser Werkzeugschlitten alle anderen Werkzeugschlitten. Wenn der Werkzeugschlitten dann außer Eingriff mit der Mitnehmernut gerät, gelangt ein neuer Werkzeugschlitten in Eingriff und schiebt die anderen Werkzeugschlitten weiter.

Der Erfinder der vorliegenden Anmeldung hat jedoch erkannt, dass es besonders vorteilhaft ist, wenn umfänglich auf der Zylinderfläche - vorzugsweise gleich verteilt - mehrere parallel zueinander verlaufende Mitnehmernuten angeordnet sind.

Durchmesser der Spirale, Steigung der Führungsbahn und Anzahl der Mitnehmernuten können dann so gewählt werden, dass die Werkzeugschlitten in der Spirale vereinzelt werden, so dass sie nicht klemmen, aber die Spirale dennoch dicht mit Werkzeugschlitten bestückt ist.

Dabei ist es bevorzugt, wenn zumindest eine Mitnehmernut sich über die ganze Höhe des Antriebszylinders erstreckt.

Dies sorgt für einen Antrieb und gleichzeitig für Vereinzelung der Werkzeugschlitten über der ganzen Spirale, nur in der oberen und unteren Querverbindung zwischen den Spiralen werden die Werkzeugschlitten geschoben

Jede Mitnehmernut kann dabei an ihrem oberen und ihrem unteren Ende in einer trichterförmigen Erweiterung enden, die als Ein- und Auslauf für die Führungsteile an den Werkzeugschlitten dienen.

Weiter ist es bevorzugt, wenn der Werkzeugschlitten eine Schlittenplatte umfasst, die an ihrer ersten Seite zumindest einen Werkzeughalter aufweist und an ihrer zweiten Seite zumindest zwei Laufrollen trägt, mit denen der Werkzeugschlitten verschiebbar in der Führungsnut gelagert ist, wobei vorzugsweise an zumindest einer Laufrolle ein Führungsteil vorgesehen ist.

Diese Maßnahmen sind konstruktiv von Vorteil, denn sie sorgen auf einfache Art und Weise dafür, dass die Werkzeugschlitten in der Führungsnut und in den Mitnehmernuten nicht klemmen.

Dabei ist es bevorzugt, wenn die Führungsnut in einem zylindrischen Mantelblech des Zylindergehäuses ausgebildet ist, vorzugsweise jedes Zylindergehäuse ein oberes Zwischenblech und ein unteres Zwischenblech aufweist, die das zylindrische Mantelblech in beiden Richtungen der Zylinderhochachse abschließen, weiter vorzugsweise sich das obere und das untere Zwischenblech jeweils über ein Lager an dem Antriebszylinder abstützen, und ferner vorzugsweise an dem oberen Zwischenblech einer Spiralbahneinheit Verbindungsmittel vorgesehen sind, die mit einem unteren Zwischenblech einer nächsten höher anzuordnenden Spiralbahneinheit in Eingriff bringbar sind.

Diese Maßnahmen tragen auf konstruktiv einfache Weise dazu bei, dass jede Spiralbahneinheit sehr steif ausgebildet ist, so dass sich Form und Lage der Führungsnut auch dann nicht ändert, wenn viele Spiralbahneinheiten übereinander gestapelt werden. Die längs der Zylinderhochachse auf eine Spiralbahneinheit ausgeübten Kräfte werden nämlich nicht in die Mantelbleche geleitet, sondern über den drehbar gelagerten Antriebszylinder von dem oberen auf das untere Zwischenblech und von dort auf das Obere Zwischenblech der nächst tieferen Spiralbahneinheit übertragen.

Allgemein ist es bevorzugt, wenn eine zentrale Antriebswelle vorgesehen ist, die zentrisch durch alle übereinander angeordneten Spiralbahneinheiten verläuft und drehfest mit jedem Antriebszylinder der übereinander angeordneten Spiralbahneinheiten verbunden ist, und wenn vorzugsweise die in einer Spirale untere Spiralbahneinheit mit ihrem unteren Zwischenblech über Verbindungsmittel mit einem Antriebsgehäuse verbunden ist, in dem ein Drehantrieb für eine zentrale Antriebswelle angeordnet ist.

Hier ist von Vorteil, dass auf konstruktiv einfache Weise alle Antriebszylinder synchron gedreht werden und zudem die Antriebszylinder konzentrisch zu den Zylindergehäusen gehalten werden.

Vor diesem Hintergrund betrifft die vorliegende Erfindung auch Spiralbahneinheit für das neue Werkzeugmagazin, die ein Zylindergehäuse und einen in dem Zylindergehäuse um seine Zylinderhochachse drehbar gelagerten Antriebszylinder umfasst, wobei an dem Zylindergehäuse eine spiralförmige Führungsnut für Werkzeugschlitten ausgebildet ist, und an dem Antriebszylinder zumindest ein Antriebsmittel vorgesehen ist, das bei relativer Drehung des Antriebszylinders gegenüber dem Zylindergehäuse einen Werkzeugschlitten längs der Führungsnut verschiebt.

Derartige Spiralbahneinheiten sind gesondert verkehrsfähige Einheiten, die auch zum nachträglichen Ausbau der neuen Werkzeugmagazine verwendet werden können. Sie weisen die oben bereits diskutierten Merkmale und Vorteile auf.

Weitere Vorteile ergeben sich aus der Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, solange sie unter dem Umfang der beigefügten Ansprüche fallen.

Ausführungsbeispiele der Erfindung sind in der Zeichnung dargestellt und werden in der nachfolgenden Beschreibung näher erläutert. Es zeigen:
- Fig. 1: in schematischer Seitenansicht eine Werkzeugmaschine, hinter der das neue Werkzeugmagazin aufgebaut ist;
- Fig. 2: in schematischer Vorderansicht das Werkzeugmagazin aus Fig. 1;
- Fig. 3: eine schematische Draufsicht auf das Werkzeugmagazin aus Fig. 2;
- Fig. 4: in einer Darstellung wie Fig. 2 ein konkretes Ausführungsbeispiel für das Werkzeugmagazin aus Fig. 2, ausschnittsweise und teilweise weggebrochen;
- Fig. 5: eine schematische Seitenansicht eines Werkzeugschlittens für das Werkzeugmagazin aus Fig. 4;
- Fig. 6: eine in Fig. 5 von links gesehene, schematische Ansicht des Werkzeugschlittens aus Fig. 5;
- Fig. 7: eine teilweise geschnittene, schematische Darstellung der linken Spirale aus dem Werkzeugmagazin aus Fig. 4 vor der Montage; und
- Fig. 8: eine teilweise geschnittene, schematische Explosionsdarstellung einer Spiralbahneinheit aus Fig. 7.

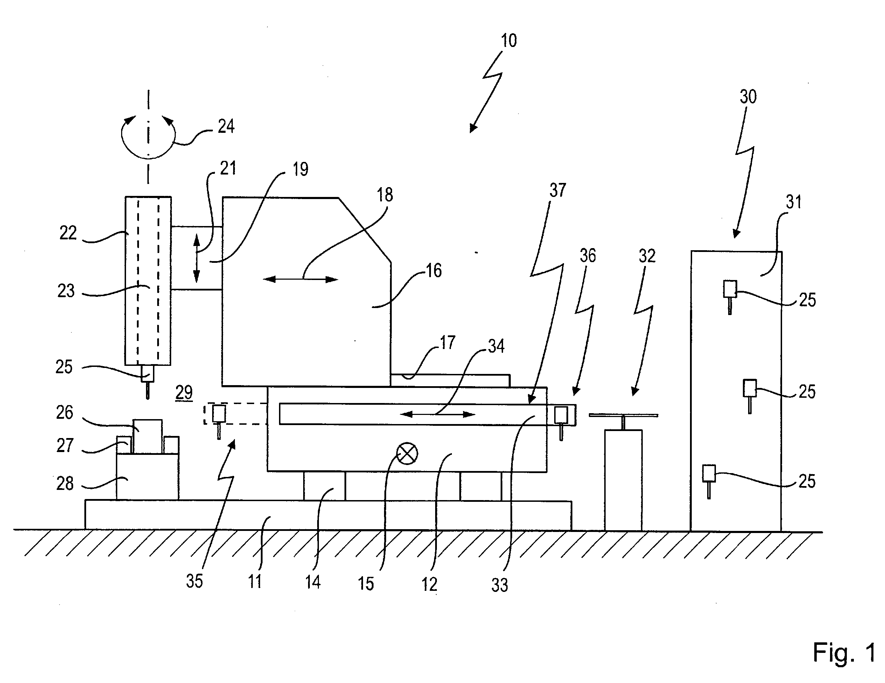

In Fig. 1 ist mit 10 sehr schematisch eine Werkzeugmaschine in Seitenansicht gezeigt. Die Werkzeugmaschine 10 ist eine Fahrständermaschine, bei der auf einem Maschinengestell 11 ein Schlitten 12 angeordnet ist, der auf Führungen 14 in x-Richtung 15 verfahrbar ist.

Auf dem x-Schlitten 12 verfährt ein Fahrständer 16 auf Führungen 17, die sich in y-Richtung 18 erstrecken. An dem Fahrständer 16 ist ein Schlitten 19 angeordnet, der in z-Richtung 21 verfahrbar, also höhenverstellbar ist.

Der Schlitten 21 trägt einen Spindelkopf 22, in dem eine Werkzeugspindel 23 in an sich bekannter Weise um eine Drehachse 24 drehbar gelagert ist.

Die Werkzeugspindel 23 weist an ihrem unteren Ende eine übliche Werkzeugaufnahme zum Einspannen eines Werkzeuges 25 auf, mit dem ein Werkstück 26 bearbeitet wird, das in einer Vorrichtung 27 gehalten wird, die auf einem Werkstücktisch 28 im Arbeitsraum 29 angeordnet ist.

Auf diese Weise kann die Werkzeugmaschine 10 mit Hilfe eines Werkzeuges 25 das Werkstück 26 in den drei orthogonalen Raumachsen 15, 18, 21 bearbeiten.

Hinter der Werkzeugmaschine 10 ist getrennt von dem Maschinengestell 11 ein sehr schematisch angedeutetes Werkzeugmagazin 30 aufgebaut, das als Hintergrundmagazin 31 wirkt und in dem zahlreiche Werkzeuge 25 zwischengelagert sind. Die Werkzeuge werden dabei in Werkzeughalter eingeklemmt, wie es aus dem Stand der Technik an sich bekannt ist.

Lediglich der guten Ordnung halber sei erwähnt, dass die Erfindung auch mit einer Werkzeugmaschine realisierbar ist, bei der die Werkzeugspindel 23 nicht vertikalachsig sondern horizontalachsig ausgerichtet ist, wobei ferner nicht alle drei Bewegungsachsen 15, 18, 21 in dem Werkzeug 25 realisiert sein müssen; zumindest eine Bewegungsachse kann auch in dem Werkstück 26 realisiert sein, wie dies prinzipiell aus dem Stand der Technik bekannt ist.

Zwischen dem Hintergrundmagazin 31 und der Werkzeugmaschine 10 ist eine schematisch dargestellte Entnahmevorrichtung 32 angeordnet, die Werkzeuge in dem Hintergrundmagazin 31 ablegt oder aus dem Hintergrundmagazin 31 entnimmt. Als Entnahmevorrichtung 32 kann beispielsweise ein Doppelgreifer verwendet werden, wie er aus dem eingangs beschriebenen Stand der Technik bekannt ist, sodass wegen weiterer Ausführungen auf diese Dokumente verwiesen wird.

Mit dem Hintergrundmagazin 31 wirkt ein Maschinenmagazin 33 zusammen, das an dem x-Schlitten 12 mitfahrend angeordnet ist. Dieses Maschinenmagazin 33 ist in der durch einen Doppelpfeil 34 angedeuteten Richtung zum einen so verfahrbar, dass es mit seinem vorderen Ende in den Arbeitsraum 29 hineinragt und dort eine Werkzeugwechselposition 35 für die Werkzeugspindel 23 bereitstellt. Die Werkzeugwechselposition 35 ist in Fig. 1 gestrichelt dargestellt.

In der durchgezogen dargestellten Position des Maschinenmagazins 33 befindet es sich mit seinem hinteren Ende in einer Werkzeugaustauschposition 36, in der Werkzeuge 25 zwischen dem Maschinenmagazin 33 und dem Hintergrundmagazin 31 mit Hilfe der Entnahmevorrichtung 32 ausgetauscht werden können.

Das Maschinenmagazin 33 wirkt als Übergabevorrichtung 37, die Werkzeuge 25 aus dem Hintergrundmagazin 31 zwischenspeichert und zum Einwechseln in die Werkzeugspindel 23 bereithält. Das Maschinenmagazin 33 kann beispielsweise dreißig Werkzeuge 25 zwischenspeichern.

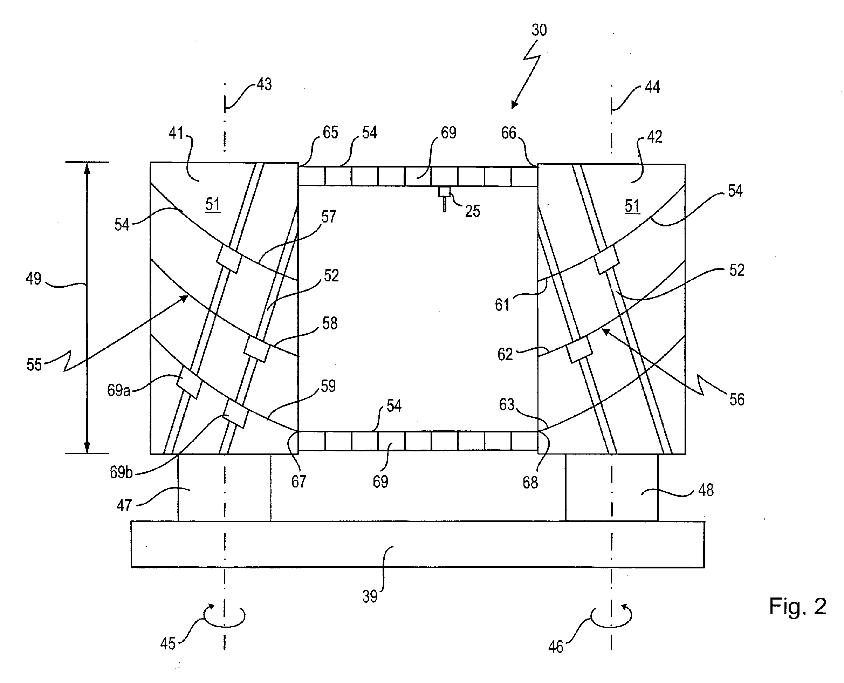

In Fig. 2 ist in das Werkzeugmagazin 30 in schematischer Vorderansicht gezeigt.

Das Werkzeugmagazin 30 weist ein Gestell 39 auf, auf dem nebeneinander zwei Antriebszylinder 41 und 42 angeordnet sind, die jeweils eine Zylinderhochachse 43 bzw. 44 aufweisen, um die sie in Drehrichtung 45 bzw. 46 gegensinnig durch Antriebe angetrieben sind, die in schematisch gezeigten Antriebsgehäusen 47 bzw. 48 angeordnet sind.

Jeder Antriebszylinder 41, 42 weist eine Höhe 49 sowie eine Zylinderfläche 51 auf.

In jeder Zylinderfläche 51 sind nach außen offene Mitnehmernuten 52 angeordnet, die sich schräg zu der Zylinderhochachse 43 bzw. 44 erstrecken und die gesamte Höhe 49 überstreichen.

Entsprechend der gegensinnigen Drehrichtungen 45 und 46 sind die Mitnehmernuten 52 in den beiden Antriebszylindern 41 bzw. 42 gegensinnig geneigt.

Um die Antriebszylinder 41, 42 herum und zwischen ihnen ist eine in sich geschlossene, dreidimensionale Laufbahn 54 angeordnet, die in zwei Spiralen 55, 56 um die Antriebszylinder 41, 42 herum gelegt ist und in Fig. 2 lediglich schematisch gezeigt ist.

Die Spiralen 55, 56 sind gegensinnig gewickelt, während die Spirale 55 im Uhrzeigersinn aufsteigt, steigt in der Spirale 56 die Laufbahn 54 gegen den Uhrzeigersinn auf.

Die linke Spirale 55 weist drei übereinanderliegende Windungen 57, 58, 59 auf, während die rechte Spirale 56 drei übereinanderliegende Windungen 61, 62, 63 aufweist.

Die Zahl der Windungen sowie die Zahl der Mitnehmernuten 52 ist in Fig. 2 lediglich beispielhaft dargestellt.

An ihren oberen Enden 65, 66 sowie an ihren unteren Enden 67, 68 sind die beiden Spiralen 55, 56 miteinander verbunden, so dass die Laufbahn 54 insgesamt in sich geschlossen ist und eine Endloslaufbahn bildet.

An der Laufbahn 54 sind längs verschiebbar Werkzeugschlitten 69 angeordnet, die jeweils mit einem Werkzeug 25 bestückt werden können, wie es in Fig. 2 oben zwischen den oberen Enden 65 und 66 beispielhaft gezeigt ist. Die Werkzeugschlitten 69 können somit an bzw. auf der Laufbahn 54 endlos im Kreis oder hin und her geschoben werden.

Die Werkzeugschlitten 69 sind mit einem noch zu beschreibenden Führungsteil versehen, mit dem sie in die Mitnehmernuten 52 eingreifen. Beim Drehen des Antriebszylinders 41 bzw. 42 werden die Werkzeugschlitten 69 daher längs der Laufbahn 54 auf dem Antriebszylinder 41 spiralförmig nach oben und auf dem Antriebszylinder 42 spiralförmig nach unten bewegt..

Wenn die Werkzeugschlitten 69 die Spirale 55 an ihrem oberen Ende 65 verlassen, sind sie folglich ohne Antrieb, so dass sie sich zwischen den beiden oberen Enden 65 und 66 ansammeln, wie dies in Fig. 2 gezeigt ist. Der nächste Werkzeugschlitten 69, der jetzt die Spirale 55 am oberen Ende 65 verlässt, drückt den rechten Führungsschlitten 69 jetzt an dem oberen Ende 66 der Spirale 56 nach rechts auf den Antriebszylinder 42, wo er in Eingriff mit den dortigen Mitnehmernuten 52 gelangt und beim Drehen des Antriebszylinders 42 allmählich nach unten bewegt wird.

Auch zwischen den unteren Enden 67 und 68 der Spiralen 55 und 56 sind die Werkzeugschlitten 69 ohne Antrieb, sie werden in Fig. 2 dort von rechts nach links gedrückt, wenn ein weiterer Werkzeugschlitten 69 die rechte Spirale 56 verlässt.

Werden die Antriebszylinder 41, 42 jeweils in die entgegensetzten Richtungen gedreht, so bewegen sich die Werkzeugschlitten 69 auf dem Antriebszylinder 41 spiralförmig nach unten und auf dem Antriebszylinder 42 spiralförmig nach oben und oben zwischen den Spiralen 55 und 56 entsprechend von rechts nach links.

Mit jeder Drehung eines Antriebszylinders 41, 42 wird ein Werkzeugschlitten, der in Eingriff mit einer entsprechenden Mitnehmernut 52 ist, genau durch eine der Windungen 57, 58, 59; 61, 62, 63 gefahren.

Durch die Zahl der Mitnehmernuten 52 bzw. durch ihren Abstand zueinander in Umfangsrichtung der Antriebszylinder 41, 42 werden die Werkzeugschlitten 69 in den Spiralen 55 und 56 vereinzelt, so dass sie nicht in Anlage miteinander sind, sondern längs der Laufbahn 54 einen gewissen Abstand zueinander aufweisen, wie dies auf dem linken Antriebszylinder 41 für die Werkzeugschlitten 69a und 69b gezeigt ist. Auf diese Weise wird vermieden, dass sich die bei Drehung der Antriebszylinder 41, 42 die in den Spiralen 55, 56 längs der Laufbahn 54 bewegten Werkzeugschlitten 69 verkeilen oder verklemmen.

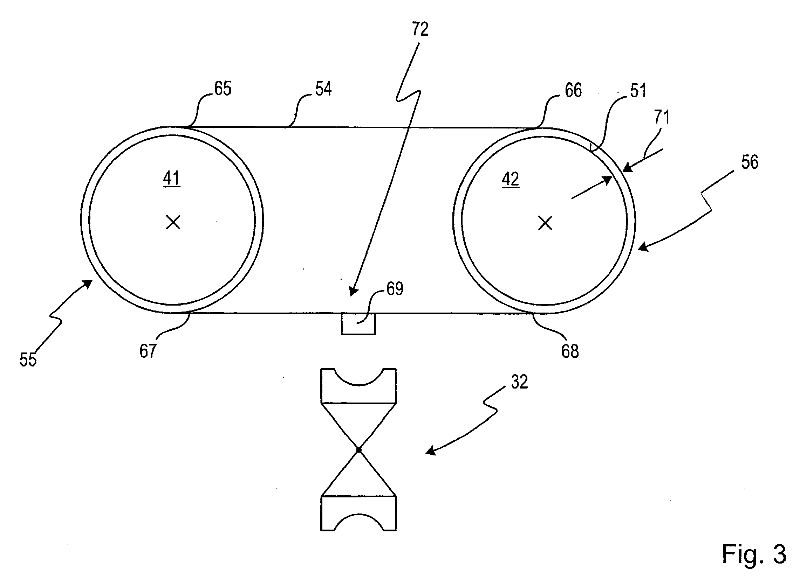

In Fig. 3 ist das Werkzeugmagazin 30 aus Fig. 2 in schematischer Draufsicht gezeigt.

In Fig. 3 ist zunächst zu erkennen, dass die Laufbahn 54 in sich geschlossen ist und im Bereich der Spiralen 55 und 56 den Zylinderflächen 51 folgt, zu denen sie einen geringen Abstand 71 aufweisen.

Zwischen den Spiralen 55 und 56, genauer zwischen ihren unteren Enden 67 und 68, ist eine Übergabeposition 72 vorgesehen, an der in Fig. 3 ein Werkzeugschlitten 69 gezeigt ist, dem gegenüber die aus Fig. 1 bekannte Entnahmevorrichtung 32 angeordnet ist.

An der Übergabeposition 72 können Werkzeuge aus Werkzeugschlitten 69 entnommen oder in freie Werkzeugschlitten 69 eingelegt werden.

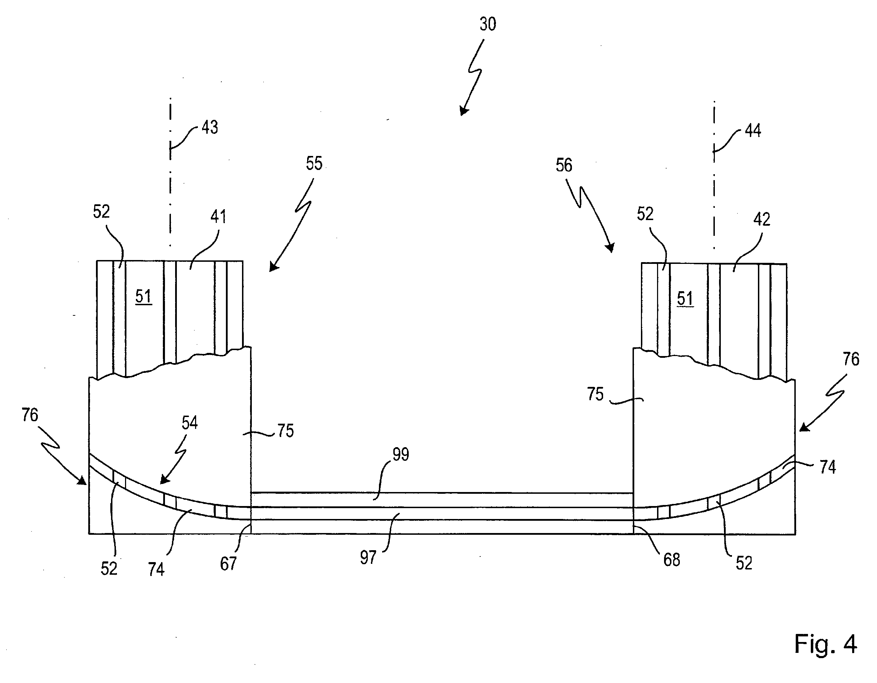

In Fig. 4 ist ein konkretes Ausführungsbeispiel für das Werkzeugmagazin 30 gezeigt, das aus Gründen der Übersichtlichkeit ausschnittsweise und teilweise gebrochen dargestellt ist.

Das Werkzeugmagazin 30 umfasst wieder die beiden Spiralen 55 und 56, die jeweils einen Antriebszylinder 41 und 42 aufweisen, der um eine Zylinderhochachse 43 bzw. 44 angetrieben ist.

In den Zylinderflächen 51 der Antriebszylinder 41, 42 sind wieder Mitnehmernuten 52 vorgesehen, die jetzt jedoch nicht nur parallel zueinander sondern auch parallel zu den Zylinderhochachsen 43 bzw. 44 verlaufen.

Die in sich geschlossene, dreidimensionale Laufbahn 54 ist in dem konkreten Ausführungsbeispiel durch eine Führungsnut 74 gebildet, die in Mantelblechen 75 verläuft, die als Zylindergehäuse 76 die Antriebszylinder 41 und 42 umgeben. In den Mantelblechen 75 sind also nach innen zu den Antriebszylindern 41, 42 hin durchgehend offene Führungsnuten 75 vorgesehen.

In Fig. 4 sind die Mantelbleche 75 teilweise gebrochen dargestellt, so dass oberhalb der Bruchlinie Teile der Antriebszylinder 41, 42 zu erkennen sind.

In jedem Mantelblech 75 verläuft die Führungsnut 74 spiralförmig so, wie dies ausführlicher in Figur 2 allgemein für die Laufbahn 54 gezeigt und in der zugehörigen Figurenbeschreibung oben ausführlich erläutert ist.

Zwischen den unteren Enden 67 und 68 der Spiralen 55 und 56 erstreckt sich ein Fahrbahnblech 77, in dem ebenfalls die Führungsnut 74 verläuft. Ein vergleichbares Fahrbahnblech ist auch zwischen den oberen Enden 6, 66 vorgesehen.

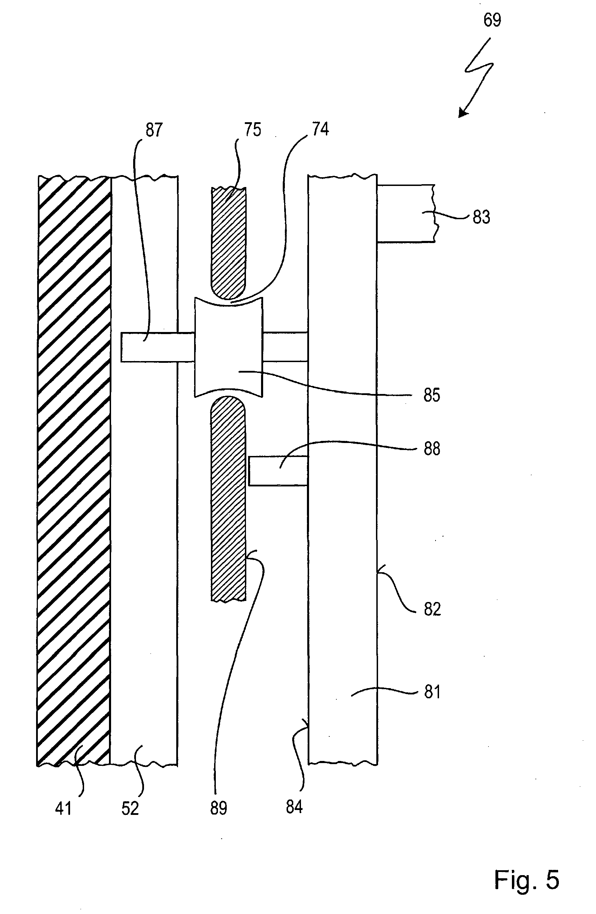

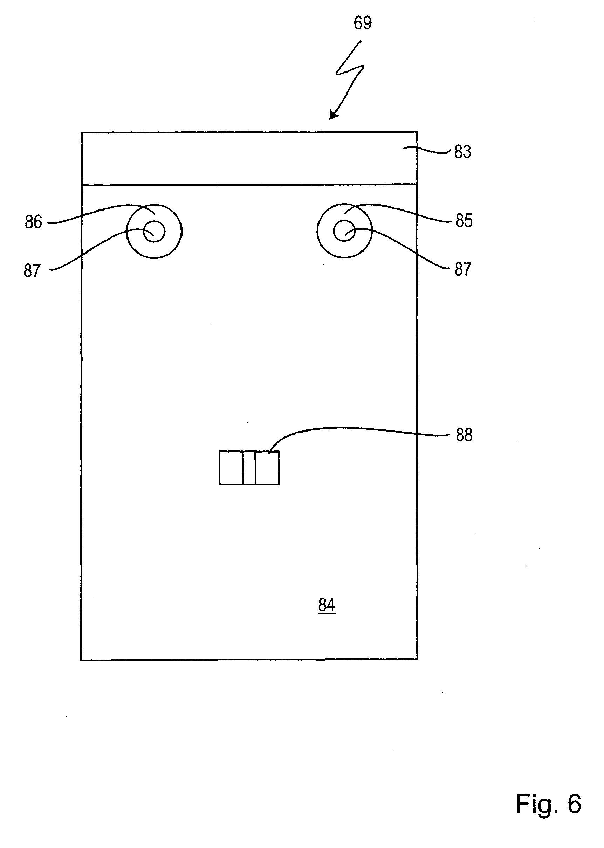

Der in Fig. 3 schematisch gezeigte Werkzeugschlitten 69 ist so aufgebaut, wie dies in den Figuren 5 und 6 dargestellt ist.

Der Werkzeugschlitten 69 weist eine Schlittenplatte 81 auf, an deren rechter Seite 82 ein Werkzeughalter 83 angeordnet ist, der hier lediglich gebrochen dargestellt ist.

Auf ihrer linken Seite 84 sind an der Schlittenplatte 81 zwei Laufrollen 85 und 86 angeordnet, die nebeneinander liegen, so dass sie beide in die Führungsnut 74 eingreifen, wie dies in Fig. 6 schematisch dargestellt ist.

Die Führungsnut 74 verläuft in dem in Fig. 5 geschnitten dargestellten zylindrischen Mantelblech 75. In Fig. 5 links neben dem Mantelblech 75 ist der Antriebszylinder 41 geschnitten dargestellt, wobei ein Führungsteil 87 des Werkzeugschlittens 69 mit der Laufrolle 85 verbunden ist und in die Mitnehmernut 52 hineinragt. Auch mit der Laufrolle 86 ist ein Führungsteil 87 verbunden, wie sich aus Fig. 6 ergibt.

Damit der Werkzeugschlitten 69 nicht verkippt, ist unterhalb der Laufrollen 85, 86 ein Distanzteil 88 angeordnet, mit dem sich die Schlittenplatte 81 auf einer Mantelfläche 89 des Mantelblechs 75 abstützt.

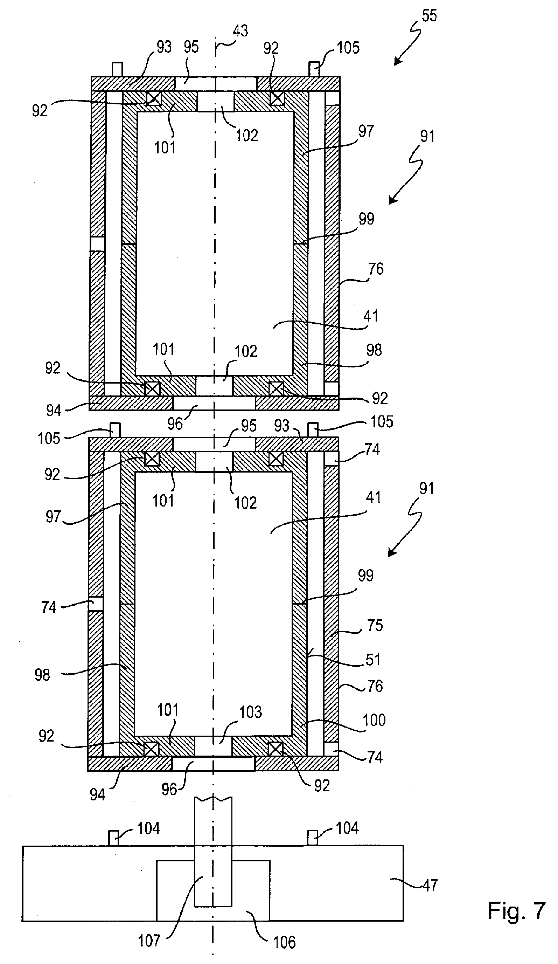

In Fig. 7 ist in einer teilweise geschnittenen Darstellung die linke Spirale 55 des Werkzeugmagazins 30 aus Fig. 4 im Detail und vor der Montage dargestellt.

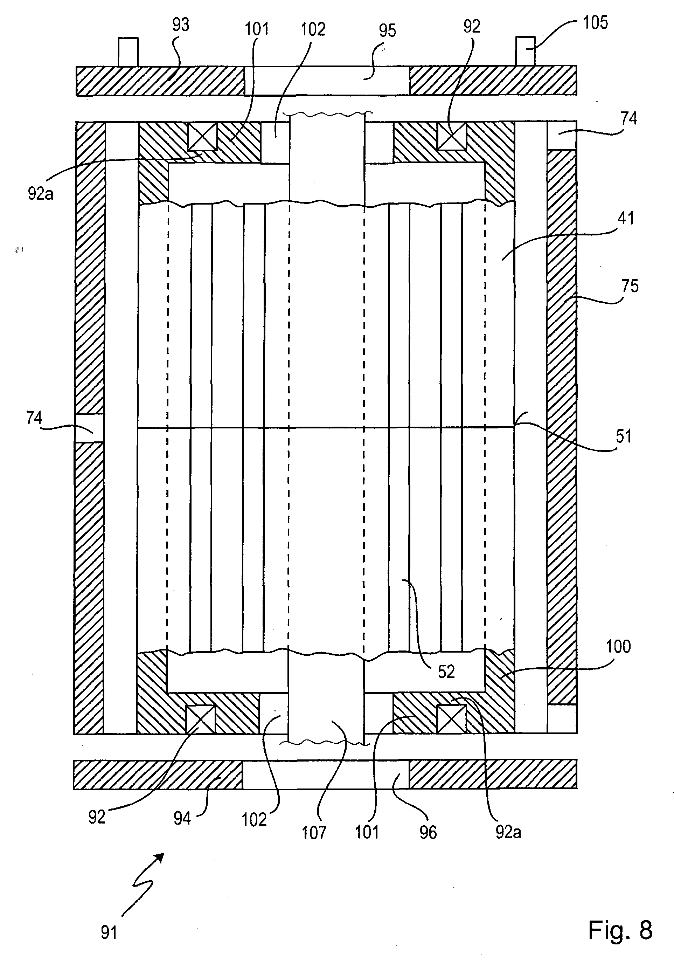

Die Spirale umfasst hier zwei in Richtung der Zylinderhochachse 43 übereinander angeordnete Spiralbahneinheiten 91, die jeweils ein Zylindergehäuse 76 mit darin über Lager 92 drehbar gelagertem Antriebszylinder 41 aufweisen. In Fig. 8 ist in einer detaillierteren Explosionsdarstellung eine Spiralbahneinheit 91 gezeigt.

In jeder Spiralbahneinheit 91 ist in dem Mantelblech 75 genau eine 360°-Windung der Führungsnut 74 enthalten, so dass diese jeweils unten rechts in Fig. 7 oder Fig. 8 beginnt, auf der linken Seite der Zylindergehäuse 76 ihren halben Umlauf beendet hat, und oben rechts endet. Das Mantelblech 75 wird dabei wie eine Art Wickelfalzrohr aufgewickelt, wobei statt einer Naht die umlaufende Führungsnut 74 gebildet wird.

Die zylindrischen Mantelbleche 75 sind oben und unten jeweils durch ein Zwischenblech 93 bzw. 94 verschlossen, das mit dem jeweiligen Mantelblech 75 verschweißt ist. In jedem Zwischenblech 93, 94 ist eine koaxial zu der Zylinderhochachse 43 liegende Durchgangsöffnung 95 bzw. 96 vorgesehen.

Die in dem so gebildeten, dosenartigen Zylindergehäuse 76 drehbar gelagerten Antriebszylinder 41 bestehen jeweils aus einem oberen und einem unteren dosenartigen, rotationssymmetrischen Teil 97 bzw. 98 mit je einer Zylinderwand 100, die an einer Trennnaht 99 über nicht dargestellte Stifte unverdrehbar miteinander verbunden sind. An der Zylinderwand 100 ist die Zylinderfläche 51 mit den Mitnehmernuten 52 ausgebildet.

Jedes Teil 97, 98 weist einen Boden 101 auf, in dem eine zu der Zylinderhochachse 43 symmetrische Durchgangsöffnung 102 bzw. 103 vorgesehen ist.

Durch die beiden Zwischenbleche 93, 94 werden über die Lager 92, die als Axial-Rillenkugellager ausgebildet und in einer umlaufenden Nut 92a in den Böden 101 angeordnet sind, die beiden Teile 97, 98 in Richtung der Zylinderhochachse 43 aufeinandergedrückt. Jede Spiralbahneinheit 91 bildet so eine getrennt handhabbare und verkehrsfähige Einheit aus Zylindergehäuse 76 und darin unverlierbar gehaltenem Antriebszylinder 41.

Bei der Montage des Werkzeugmagazins 30 wird das Zylindergehäuse 76 der unteren Spiralbahneinheit 91 auf das Antriebsgehäuse 47 aufgesetzt, an dem Verbindungsmittel in Form von Zapfen 104 vorgesehen sind, auf die das untere Zwischenblech 94 aufgesteckt wird, wodurch die vorab fertig montierte untere Spiralbahneinheit 91 unverdrehbar und quer zur Zylinderhochachse 43 unverschieblich auf dem Antriebsgehäuse 47 fixiert wird.

Vergleichbare Zapfen 105 sind als Verbindungsmittel an den oberen Zwischenblechen 93 der Spiralbahneinheiten 91 vorgesehen, so dass mehrere Spiralbahneinheiten 91 übereinander gestapelt und unverdrehbar und quer zur Zylinderhochachse 43 unverschieblich aneinander befestigt werden können, weil die Zapfen 105 in nicht dargestellte, zugeordnete Löcher in den unteren Zwischenblechen 94 der jeweils nächst höheren Spiralbahneinheit 91 eingreifen.

Das Antriebsgehäuse 47 weist einen schematisch gezeigten Drehantrieb 106 auf, in dem eine Antriebswelle 107 sitzt, die in Fig. 7 und Fig. 8 gebrochen gezeigt ist. Bei montierten Spiralbahneinheiten 91 verläuft die Antriebswelle 107 durch die Durchgangsöffnungen 96, 103, 102 und 95 einer jeden Spiralbahneinheit 91 und ist drehfest mit jedem Antriebszylinder 41 verbunden.

Die Antriebwelle 107 kann aus einzelnen Abschnitten bestehen, von denen jeweils einer in jeder Spiralbahneinheit 91 vorgesehen ist. Die Abschnitte der Antriebswelle 107 können dabei unverlierbar an den Antriebszylindern 41 der vormontierten Spiralbahneinheiten 91 befestigt sein.

Beim Aufeinanderstecken der Spiralbahneinheiten 91 werden dann auch die einzelnen Abschnitte der Antriebswelle 107 drehfest miteinander verbunden.

Es ist auch möglich, die Abschnitte der Antriebwelle 107 gesondert von den Spiralbahneinheiten 91 vorrätig zu halten und erst bei der Montage des Werkzeugmagazins 30 in die jeweilige Spiralbahneinheit 91 einzusetzen.

Bevorzugt ist jedoch nur eine einzige Antriebswelle 107 je Spirale 5, 56 vorgesehen, die durch alle Spiralbahneinheiten 91 verläuft und eine besonders hohe Torsionssteifigkeit aufweist.

Die Antriebwelle 107 kann über Flansche oder sonstige Klemmteile mit den Böden 101 der Antriebszylinder 41 verbunden werden, wobei es alternativ auch möglich ist, keine runde Welle sondern eine Mehrkantwelle als Antriebwelle 107 zu verwenden, und die Durchgangsöffnungen 102 und 103 an das Profil der Antriebswelle 107 so anzupassen, diese in Umfangsrichtung formschlüssig in den Böden 101 gehalten ist.

Durch den gezeigten Aufbau werden zudem die Antriebszylinder 41 zentrisch zu den Zylindergehäusen 76 gehalten.

Wenn die Speicherkapazität des neuen Werkzeugmagazins 30 erhöht werden soll, müssen lediglich weitere Spiralbahneinheiten 91 oben auf die bisher oberste Spiralbahneinheit 91 aufgesteckt werden. Wenn eine durchgehende Antriebwelle 107 vorgesehen ist, muss dabei die bisherige Antriebswelle 107 durch eine entsprechend längere Antriebwelle 107 ersetzt werden.

Die Anordnung ist dabei so getroffen, dass sich in einer Spiralbahneinheit 91 das obere und untere Zwischenblech 93 bzw. 94 über die Lager 92 auf dem Antriebszylinder 41 abstützen, so dass von oben auf das obere Zwischenblech 93 lastende Kräfte nicht in das Mantelblech 75 geleitet werden, sondern über den Antriebszylinder 41 in das unter Zwischenblech 94 und von dort in das obere Zwischenblech 93 der nächst tieferen Spiralbahneinheit 91 geleitet werden.

Auf diese Weise wird verhindert, dass sich die in der Mantelfläche 75 verlaufende Führungsnut 74 verbiegt oder verzieht, was ansonsten dazu führen könnte, dass die in den Führungsnuten 74 verschiebbaren Werkzeugschlitten 69 verklemmen.

Weil pro Spiralbahneinheit 91 eine 360°-Windung der umlaufenden Führungsnut 74 vorgesehen ist, ist das Mantelblech 75 oberhalb und unterhalb der Führungsnut 74 jeweils an einem Zwischenblech 93, 94 befestigt, was die Festigkeit der Spiralbahneinheit 91 weiter erhöht. Auch die in der Führungsnut 74 laufenden Werkzeugschlitten 69 können wegen dieser mechanischen Fixierung des Mantelblechs 75 die Führungsnut 74 nicht verbiegen.

Es ist daher gefahrlos möglich, mehrere Spiralbahneinheiten 91 übereinander zu stapeln und so die Speicherkapazität des Werkzeugmagazins 30 nahezu beliebig zu erhöhen, und pro 360° Windung der Führungsnut 74 viele Werkzeugschlitten 69 zu speichern, an denen auch schwere Werkzeuge gehalten sein können.

Wenn in dem Antriebszylinder 41 beispielsweise zwanzig Mitnehmernuten 52 vorgesehen sind, lassen sich in einer Spiralbahneinheit 91 zwanzig direkt über den Antriebszylinder 41 bewegte Werkzeugschlitten 69 speichern, so dass bei fünf in jeder Spirale 55, 56 übereinander angeordneten Spiralbahneinheiten 91 zweihundert Werkzeugschlitten 69 allein in den beiden Spiralen 55, 56 und zwei mal zehn oder mehr Werkzeugschlitten 69 in den geraden Verbindungsstrecken der Laufbahn 54 zwischen den oberen Enden 65 und 66 sowie den unteren Enden 67 und 68 gespeichert werden können.

## Patentansprüche

1. Werkzeugmagazin für eine Werkzeugmaschine (10) mit einer Werkzeugspindel (23), in die Werkzeuge (25) zur Bearbeitung von Werkstücken (26) einspannbar sind, wobei in dem Werkzeugmagazin (30) Werkzeughalter (83) vorgesehen sind, in denen zum Einwechseln in die Werkzeugspindel (23) vorgesehene Werkzeuge (25) ablegbar sind,
**dadurch gekennzeichnet, dass** zumindest zwei übereinander angeordnete Spiralbahneinheiten (91) vorgesehen sind, die jeweils ein Zylindergehäuse (76) und einen in dem Zylindergehäuse (76) um seine Zylinderhochachse (43, 44) drehbar gelagerten Antriebszylinder (41, 42) umfassen, an jedem Zylindergehäuse (76) eine spiralförmige Führungsnut (74) ausgebildet ist, an der Werkzeugschlitten (69) verschiebbar gelagert sind, an denen die Werkzeughalter (83) ausgebildet sind, und an jedem Antriebszylinder (41, 42) zumindest ein Antriebsmittel (52) vorgesehen ist, das bei relativer Drehung des Antriebszylinders (41, 42) gegenüber dem Zylindergehäuse (76) einen Werkzeugschlitten (69) längs der Führungsnut (74) verschiebt.

2. Werkzeugmagazin nach Anspruch 1, **dadurch gekennzeichnet, dass** die Führungsnut (74) als in sich geschlossene, dreidimensionale Laufbahn (54) für die Werkzeugschlitten (69) ausgebildet ist.

3. Werkzeugmagazin nach Anspruch 2, **dadurch gekennzeichnet, dass** in den zumindest zwei übereinander angeordneten Spiralbahneinheiten (91) die Führungsnut (74) in Form zumindest einer Spirale (55, 56) mit vertikal übereinander verlaufenden Windungen (57, 58, 59; 61, 62, 63) angeordnet ist.

4. Werkzeugmagazin nach Anspruch 3, **dadurch gekennzeichnet, dass** die Führungsnut (74) in Form von zwei Spiralen (55, 56) angeordnet ist, die gegensinnig gewickelt und an ihren oberen (65, 66) sowie unteren (67, 68) Enden miteinander verbunden sind.

5. Werkzeugmagazin nach einem der Ansprüche 1 bis 4, **dadurch gekennzeichnet, dass** die Führungsnut (74) in jeder Spiralbahneinheit (91) eine Windung (57, 58, 59; 61,61, 63) von 360° durchläuft.

6. Werkzeugmagazin nach einem der Ansprüche 1 bis 5, **dadurch gekennzeichnet, dass** der Antriebszylinder (41, 42) eine Zylinderfläche (51) aufweist, das Antriebsmittel (52) zumindest eine nach außen offene Mitnehmernut (52) an der Zylinderfläche (51) umfasst, die sich parallel zu der Zylinderhochachse (43, 44) erstreckt, und dass an zumindest einem Werkzeugschlitten (69) ein Führungsteil (87) vorgesehen ist, das in die Mitnehmernut (52) eingreift, wenn sich der Werkzeugschlitten (69) an der Führungsnut (74) befindet.

7. Werkzeugmagazin nach Anspruch 6, **dadurch gekennzeichnet, dass** umfänglich auf der Zylinderfläche (51) mehrere parallel zueinander verlaufende Mitnehmernuten (52) angeordnet sind.

8. Werkzeugmagazin nach einem der Ansprüche 1 bis 7, **dadurch gekennzeichnet, dass** die Führungsnut (74) in einem zylindrischen Mantelblech (75) des Zylindergehäuses (76) ausgebildet ist.

9. Werkzeugmagazin nach einem der Ansprüche 1 bis 8, **dadurch gekennzeichnet, dass** der Werkzeugschlitten (69) eine Schlittenplatte (81) umfasst, die an ihrer ersten Seite (82) einen Werkzeughalter (83) aufweist und an ihrer zweiten Seite (84) zumindest zwei Laufrollen (85, 86) trägt, mit denen der Werkzeugschlitten (69) verschiebbar in der Führungsnut (74) gelagert ist.

10. Werkzeugmagazin nach Anspruch 6 und 9, **dadurch gekennzeichnet, dass** an zumindest einer Laufrolle (85, 86) ein Führungsteil (87) vorgesehen ist.

11. Werkzeugmagazin nach Anspruch 8, **dadurch gekennzeichnet, dass** jedes Zylindergehäuse (76) ein oberes Zwischenblech (93) und ein unteres Zwischenblech (94) aufweist, die das zylindrische Mantelblech (75) in beiden Richtungen der Zylinderhochachse (43) abschließen.

12. Werkzeugmagazin nach Anspruch 11, **dadurch gekennzeichnet, dass** sich das obere und das untere Zwischenblech (93, 94) jeweils über ein Lager (92) an dem Antriebszylinder (41) abstützen.

13. Werkzeugmagazin nach Anspruch 11 oder 12, **dadurch gekennzeichnet, dass** an dem oberen Zwischenblech (92) einer Spiralbahneinheit (91) Verbindungsmittel (105) vorgesehen sind, die mit einem unteren Zwischenblech (94) einer nächsten höher anzuordnenden Spiralbahneinheit (91) in Eingriff bringbar sind.

14. Werkzeugmagazin nach einem der Ansprüche 1 bis 13, **dadurch gekennzeichnet, dass** eine zentrale Antriebswelle (107) vorgesehen ist, die zentrisch durch alle übereinander angeordneten Spiralbahneinheiten (91) verläuft und drehfest mit jedem Antriebszylinder (41, 42) der übereinander angeordneten Spiralbahneinheiten (91) verbunden ist.

15. Werkzeugmagazin nach einem der Ansprüche 1 bis 13, **dadurch gekennzeichnet, dass** die in einer Spirale (55, 56) untere Spiralbahneinheit (91) mit ihrem unteren Zwischenblech (94) über Verbindungsmittel (104) mit einem Antriebsgehäuse (47) verbunden ist, in dem ein Drehantrieb (106) für eine zentrale Antriebswelle (107) angeordnet ist.

16. Spiralbahneinheit für ein Werkzeugmagazin (30) nach einem der Ansprüche 1 bis 15, die ein Zylindergehäuse (76) und einen in dem Zylindergehäuse (76) um seine Zylinderhochachse (43, 44) drehbar gelagerten Antriebszylinder (41, 42) umfasst, wobei an dem Zylindergehäuse (76) eine spiralförmige Führungsnut (74) für Werkzeugschlitten (69) ausgebildet ist, und an dem Antriebszylinder (41, 42) zumindest ein Antriebsmittel (52) vorgesehen ist, das bei relativer Drehung des Antriebszylinders (41, 42) gegenüber dem Zylindergehäuse (76) einen Werkzeugschlitten (69) längs der Führungsnut (74) verschiebt.

17. Spiralbahneinheit nach Anspruch 16 mit den Merkmalen nach einem der Ansprüche 5 bis 8 und 11 bis 13.

## Claims

1. Tool magazine for a machine tool (10) having a tool spindle (23), into which tool spindle tools (25) for machining workpieces (26) can be clamped, wherein in the tool magazine (30) tool holders (83) are provided, in which tool holders tools (25) provided for exchanging into the tool spindle (23) can be deposited,
**characterized in that** at least two superposed spiral track units (91) are provided, each comprising a cylinder housing (76) and a drive cylinder (41, 42) mounted in the cylinder housing (76) so as to be rotatable about its cylinder vertical axis (43, 44), at each cylinder housing (76) a helical guide groove (74) is formed whereon tool carriages (69) are mounted so as to be displaceable, on which tool carriages the tool holder (83) are formed, and that on each drive cylinder ( 41, 42) at least one drive means (52) is provided, that upon relative rotation of the drive cylinder (41, 42) relative to the cylinder housing (76) moves a tool slide (69) along the guide groove (74).

2. Tool magazine according to claim 1, **characterized in that** the guide groove (74) is formed as an in itself-closed three-dimensional track (54) for the tool carriages (69).

3. Tool magazine according to claim 2, **characterized in that** in the at least two superposed spiral track units (91) the guide groove (74) is arranged in the form of at least one spiral (55, 56) with vertically superposed running windings (57, 58, 59; 61, 62, 63).

4. Tool magazine according to claim 3, **characterized in that** the guide groove (74) is arranged in the form of two spirals (55, 56), which are wound in opposite directions and are interconnected at their upper (65, 66) and lower (67, 68) ends with each other.

5. Tool magazine according to anyone of claims 1 to 4, **characterized in that** the guide groove (74) in each spiral track unit (91) runs through a bend (57, 58, 59; 61, 61, 63) of 360°.

6. Tool magazine according to anyone of claims 1 to 5, **characterized in that** the drive cylinder (41, 42) comprises a cylindrical surface (51), the drive means (52) comprises at least one outwardly open keyway (52) on the cylinder surface (51) and extending parallel to the cylinder vertical axis (43, 44), and **in that** at least at one tool carriage (69) a guide member (87) is provided which engages into the keyway (52) when the tool slide (69) is at the guide groove (74).

7. Tool magazine according to claim 6, **characterized in that** circumferentially on the cylindrical surface (51) a plurality of mutually parallel keyways (52) are arranged.

8. Tool magazine according to anyone of claims 1 to 7, **characterized in that** the guide groove (74) is formed in a cylindrical shell plate (75) of the cylinder housing (76).

9. Tool magazine according to anyone of claims 1 to 8, **characterized in that** the tool slide (69) comprises a slide plate (81) provided at its first side (82) with a tool holder (83) and bearing at its second side (84) at least two rollers (85, 86), with which rollers the tool slide (69) is mounted in the guide groove (74) in displaceable fashion.

10. Tool magazine according to claim 6 and 9, **characterized in that** on at least one roller (85, 86) a guide member (87) is provided.

11. Tool magazine according to claim 8, **characterized in that** each cylinder housing (76) comprises an upper intermediate plate (93) and a lower intermediate sheet (94), closing the cylindrical shell plate (75) in both directions of the cylinder vertical axis (43).

12. Tool magazine according to claim 11, **characterized in that** the upper and the lower intermediate sheet (93, 94) are each supported via a bearing (92) at the drive cylinder (41).

13. Tool magazine according to claim 11 or 12, **characterized in that** at the upper intermediate sheet (92) of a spiral track unit (91) connecting means (105) are provided which are engageable with a lower intermediate sheet (94) of a spiral track unit (91) to be arranged adjacent above.

14. Tool magazine according to anyone of claims 1 to 13, **characterized in that** a central drive shaft (107) is provided, extending centrally through all superposed spiral track units (91) and fixed for rotation with each drive cylinder (41, 42) of the superimposed spiral track units (91).

15. Tool magazine according to anyone of claims 1 to 13, **characterized in that** the in a spiral (55, 56) lower spiral track unit (91) is connected with its lower intermediate sheet (94) via connecting means (104) with a drive housing (47), in which a rotary drive (106) for a central drive shaft (107) is arranged.

16. Spiral track unit for a tool magazine (30) according to anyone of claims 1 to 15, which comprises a cylinder housing (76) and a drive cylinder (41, 42) mounted in the cylinder housing (76) so as to be rotatable about its cylinder vertical axis (43, 44), wherein at the cylinder housing (76) a helical guide groove (74) for tool slides (69) is configured, and at the drive cylinder (41, 42) at least one drive means (52) is provided, which upon relative rotation of the drive cylinder (41, 42) relative to the cylinder housing (76) moves a tool carriage (69) along the guide groove (74).

17. Spiral path unit according to claim 16 having the features according to anyone of claims 5 to 8, and 11 to 13.

## Revendications

1. Magasin d'outils pour une machine-outil (10) comprenant une broche porte-outil (23), dans laquelle des outils (25) servant à usiner des pièces (26) peuvent être serrés, dans lequel des porte-outils (83) sont prévus dans le magasin d'outils (30), dans lesquels des outils (25) prévus pour le changement dans la broche porte-outil (23) peuvent être déposés,
**caractérisé en ce que** sont prévues au moins deux unités à voie en spirale (91) disposées les unes au-dessus des autres, lesquelles comprennent respectivement un boîtier de cylindre (76) et un cylindre d'entraînement (41, 42) monté dans le boîtier de cylindre (76) de manière à pouvoir tourner autour de son axe vertical de cylindre (43, 44), une rainure de guidage (74) en forme de spirale est réalisée au niveau de chaque boîtier de cylindre (76), au niveau de laquelle des chariots porte-outils (69) sont montés de manière à pouvoir être coulissés, au niveau desquels les porte-outils (83) sont réalisés, et au moins un moyen d'entraînement (52) est prévu au niveau de chaque cylindre d'entraînement (41, 42), lequel déplace par coulissement un chariot porte-outil (69) le long de la rainure de guidage (74) lors d'une rotation relative du cylindre d'entraînement (41, 42) par rapport au boîtier de cylindre (76).

2. Magasin d'outils selon la revendication 1, **caractérisé en ce que** la rainure de guidage (74) est réalisée sous la forme d'une voie de roulement (54) fermée en soi, tridimensionnelle pour les chariots porte-outils (69).

3. Magasin d'outils selon la revendication 2, **caractérisé en ce que** la rainure de guidage (74) se présentant sous la forme au moins d'une spirale (55, 56) comprenant des spires (57, 58, 59; 61, 62, 63) s'étendant verticalement les unes au-dessus des autres est disposée dans les au moins deux unités à voie en spirale (91) disposées les unes au-dessus des autres.

4. Magasin d'outils selon la revendication 3, **caractérisé en ce que** la rainure de guidage (74) est disposée sous la forme de deux spirales (55, 56), lesquelles sont enroulées en sens inverse et sont reliées l'une à l'autre au niveau de leurs extrémités supérieures (65, 66) ainsi qu'au niveau de leurs extrémités inférieures (67, 68).

5. Magasin d'outils selon l'une quelconque des revendications 1 à 4, **caractérisé en ce que** la rainure de guidage (74) traverse dans chaque unité à voie en spirale (91) une spire (57, 58, 59 ; 61, 61, 63) de 360°.

6. Magasin d'outils selon l'une quelconque des revendications 1 à 5, **caractérisé en ce que** le cylindre d'entraînement (41, 42) présente une surface de cylindre (51), le moyen d'entraînement (52) comprend au moins une rainure d'entraînement (52) ouverte vers l'extérieur au niveau de la surface de cylindre (51), qui s'étend de manière parallèle par rapport à l'axe vertical de cylindre (43, 44), et **en ce qu'**est prévue, au niveau au moins d'un chariot porte-outil (69), une partie de guidage (87), qui vient en prise avec la rainure d'entraînement (52), quand le chariot porte-outil (69) se trouve au niveau de la rainure de guidage (74).

7. Magasin d'outils selon la revendication 6, **caractérisé en ce que** plusieurs rainures d'entraînement (52) s'étendant de manière parallèle les unes par rapport aux autres sont disposées en périphérie sur la surface de cylindre (51).

8. Magasin d'outil selon l'une quelconque des revendications 1 à 7, **caractérisé en ce que** la rainure de guidage (74) est réalisée dans une tôle enveloppante (75) cylindrique du boîtier de cylindre (76).

9. Magasin d'outils selon l'une quelconque des revendications 1 à 8, **caractérisé en ce que** le chariot porte-outil (69) comprend une plaque de chariot (81), qui présente au niveau de son premier côté (82) un porte-outil (83) et supporte, au niveau de son deuxième côté (84), au moins deux galets de roulement (85, 86), par lesquels le chariot porte-outil (69) est monté de manière à pouvoir être coulissé dans la rainure de guidage (74).

10. Magasin d'outils selon la revendication 6 et 9, **caractérisé en ce qu'**une partie de guidage (87) est prévue au niveau au moins d'un galet de roulement (85, 86).

11. Magasin d'outils selon la revendication 8, **caractérisé en ce que** chaque boîtier de cylindre (76) présente une tôle intermédiaire supérieure (93) et une tôle intermédiaire inférieure (94), qui finissent la tôle enveloppante (75) cylindrique dans deux directions de l'axe vertical de cylindre (43).

12. Magasin d'outils selon la revendication 11, **caractérisé en ce que** la tôle intermédiaire supérieure et la tôle intermédiaire inférieure (93, 94) prennent appui au niveau du cylindre d'entraînement (41) respectivement par l'intermédiaire d'un palier (92).

13. Magasin d'outils selon la revendication 11 ou 12, **caractérisé en ce que** sont prévus, au niveau de la tôle intermédiaire supérieure (92) d'une unité à voie en spirale (91), des moyens de liaison (105), qui peuvent être amenés en prise avec une tôle intermédiaire inférieure (94) d'une unité à voie en spirale (91) qui suit à disposer davantage en hauteur.

14. Magasin d'outils selon l'une quelconque des revendications 1 à 13, **caractérisé en ce qu'**un arbre d'entraînement (107) central est prévu, lequel s'étend au centre à travers toutes les unités à voie en spirale (91) disposées les unes au-dessus des autres et qui est relié de manière solidaire en rotation à chaque cylindre d'entraînement (41, 42) des unités à voie en spirale (91) disposées les unes au-dessus des autres.

15. Magasin d'outil selon l'une quelconque des revendications 1 à 13, **caractérisé en ce que** l'unité à voie en spirale (91) inférieure dans une spirale (55, 56) est reliée, par sa tôle intermédiaire inférieure (94), par l'intermédiaire de moyens de liaison (104), à un boîtier d'entraînement (47), dans lequel un entraînement de rotation (106) est disposé pour un arbre d'entraînement (107) central.

16. Unité à voie en spirale pour un magasin d'outils (30) selon l'une quelconque des revendications 1 à 15, laquelle comprend un boîtier de cylindre (76) et un cylindre d'entraînement (41, 42) monté dans le boîtier de cylindre (76) de manière à pouvoir tourner autour de son axe vertical de cylindre (43, 44), dans laquelle une rainure de guidage (74) en forme de spirale pour des chariots porte-outils (69) est réalisée au niveau du boîtier de cylindre (76), et dans laquelle est prévu, au niveau du cylindre d'entraînement (41, 42), au moins un moyen d'entraînement (52), qui déplace par coulissement un chariot porte-outil (69) le long de la rainure de guidage (74) lors d'une rotation relative du cylindre d'entraînement (41, 42) par rapport au boîtier de cylindre (76).

17. Unité à voie en spirale selon la revendication 16 présentant les caractéristiques selon l'une quelconque des revendications 5 à 8 et 11 à 13.
